# EUROPÄISCHE PATENTSCHRIFT

(11) **EP 4 080 692 B1**
(45) Veröffentlichungstag und Bekanntmachung des Hinweises auf die Patenterteilung: **10.06.2026**
(21) Anmeldenummer: 21169670.3
(22) Anmeldetag: 21.04.2021
(51) Int. Cl.: H01R 11/28, H01R 13/03, H01R 13/02, H01R 25/14, H01M 50/204, H01M 50/249, H01M 50/503, H01M 50/505, H01M 50/522, H01M 50/526, H01M 50/552, H01M 50/517, H01R 4/48, H01R 4/50, H01R 11/12

(54) **ELEKTRISCHER STECKVERBINDER, ELEKTRISCHES VERBINDUNGSELEMENT UND ELEKTRISCHE STECKVERBINDUNG**
ELECTRICAL CONNECTOR, ELECTRICAL CONNECTION ELEMENT AND ELECTRICAL CONNECTION
CONNECTEUR ENFICHABLE ÉLECTRIQUE, ÉLÉMENT DE CONNEXION ÉLECTRIQUE ET PRISE ENFICHABLE ÉLECTRIQUE

(43) Veröffentlichungstag der Anmeldung: 26.10.2022
(73) Patentinhaber: Rosenberger Hochfrequenztechnik GmbH & Co. KG, 83413 Fridolfing (DE)
(72) Erfinder: Hegenauer, Johannes, 83346 Bergen (DE); Jäkel, Thomas, 84524 Neuötting (DE); Blakborn, Willem, 83334 Inzell (DE); Gottanka, Johann, 84533 Marktl (DE)
(74) Vertreter: Lorenz, Markus

(56) Entgegenhaltungen:
- EP-A1- 3 422 479
- WO-A1-2021/009170
- CN-B- 106 654 636
- DE-B4- 102018 114 764
- DE-U1- 8 903 177
- FR-A1- 3 062 956
- US-A- 2 068 452
- US-A1- 2016 118 728
- US-B2- 10 854 860

## Beschreibung

Die Erfindung betrifft einen elektrischen Steckverbinder zur elektrischen Verbindung eines in den Steckverbinder mündenden elektrischen Leiters mit einem korrespondierenden elektrischen Gegensteckverbinder. Die Erfindung betrifft außerdem ein elektrisches Verbindungselement, aufweisend wenigstens zwei elektrische Steckverbinder und einen elektrischen Leiter. Die Erfindung betrifft auch eine elektrische Steckverbindung, aufweisend einen Steckverbinder und einen Gegensteckverbinder.

Aus der Elektrotechnik sind verschiedene elektrische Steckverbinder bekannt. Elektrische Steckverbinder dienen bekanntermaßen dazu, elektrische Versorgungssignale und/oder Datensignale an korrespondierende Gegensteckverbinder zu übertragen. Bei einem Steckverbinder bzw. Gegensteckverbinder kann es sich beispielsweise um einen Stecker, um einen Einbaustecker, um eine Buchse, um eine Kupplung oder um einen Adapter handeln. Die im Rahmen der Erfindung verwendete Bezeichnung "Steckverbinder" bzw. "Gegensteckverbinder" steht stellvertretend für alle Varianten.

Besondere Anforderungen an elektrische Steckverbinder werden insbesondere im Hochvoltbereich gestellt. Hochvoltsteckverbinder werden im Fahrzeugbereich vor allem bei Elektro- und/oder Hybridfahrzeugen eingesetzt, um eine Fahrzeugbatterie mit Ladestrom zu versorgen, um die gespeicherte Energie aus der Batterie zu entnehmen und dem elektrischen Antrieb zuzuführen oder um mehrere Batterien bzw. Batteriemodule untereinander zu verbinden. Die elektrische Steckverbindung muss dabei dauerhaft und sicher ein Eindringen von Feuchtigkeit und Verunreinigungen verhindern und eine einwandfreie Übertragung hoher Ströme gewährleisten.

Neben einer sicheren und vorzugsweise niederohmigen elektrischen Verbindung zwischen den Kontaktelementen des Steckverbinder und den Gegenkontaktelementen des Gegensteckverbinder kann im Hochvoltbereich außerdem ein Berührschutz leitfähiger Komponenten von Bedeutung sein. Ein Berührschutz sollte dabei in erster Linie sicher sein. Er muss aufgrund der Massentauglichkeit der Steckverbindung aber auch einfach und kostengünstig herstellbar sein.

Außerdem sollte die Steckverbindung, insbesondere eine Hochvoltsteckverbindung oder eine Steckverbindung zur Übertragung von sicherheitsrelevanten Steuersignalen, mechanisch robust und gegen ein unbeabsichtigtes Öffnen verlässlich gesichert sein. Besonders sichere Verbindungen können beispielsweise durch eine Verschraubung zwischen Steckverbinder und Gegensteckverbinder bereitgestellt werden. Gleichwohl ist ein Toleranzausgleich bzw. die Kompensation eines Versatzes zwischen Steckverbinder und Gegensteckverbinder bei einer Schraubverbindung nur in sehr begrenztem Ausmaß möglich.

Ein steckbarer Modulverbinder zur Herstellung einer elektrischen Verbindung zwischen Batteriemodulen mit der Möglichkeit eines gewissen Versatzausgleichs wird beispielsweise in der DE 10 2018 114 764 B4 vorgeschlagen. Zur Verbindung der Batteriemodule wird eine Stromschiene seitlich an die Pole der Batteriemodule angelegt und mittels Halteklammern an den Polen fixiert. Auf diese Weise ist zumindest teilweise ein Toleranzausgleich möglich. Die vorgeschlagene Anordnung ist gleichzeitig aber aufwändig in der Montage und nur bedingt mit einem ausreichend sicheren Berührschutz ausstattbar. Auch die Verrastung der Steckverbindung in ihrem verbundenen Zustand ist nicht optimal, insbesondere nicht unter widrigen Umgebungsbedingungen. Die US 10 854 860 B2 betrifft einen ähnlichen Gegenstand, bei dem die Kontaktelemente selbst als Kontaktklammern ausgebildet sind, wodurch zumindest auf separate Halteklammern verzichtet werden kann.

Zum technischen Hintergrund sei außerdem noch auf die folgenden Druckschriften verwiesen. Die WO 2021/009170 A1 betrifft einen elektrischen Steckverbinder mit einer Gehäusebaugruppe und zumindest einem konfektionierten elektrischen Kabel, aufweisend einen Kühlkanal, wenigstens einen Innenleiter, einen Kabelmantel und ein Kontaktelement für einen elektrischen Steckverbinder. Die CN 106 654 636 B betrifft eine Batterieverbindung, insbesondere eine Verbindungsanordnung aus einer Kabelanordnung und einem Batteriepaket. Die DE 89 03 177 U1 betrifft eine Vorrichtung zum Abdecken von freiliegenden Abschnitten von im Abstand zu einer Befestigungsflache abgeordneten Stromsammelschienen. Die EP 3 422 479 A1 betrifft einen elektrischen Zellverbinder oder einen elektrischen Modulverbinder für einen Akkumulator oder eine Batterie für den Automotivebereich.

In Anbetracht des bekannten Stands der Technik besteht die Aufgabe der vorliegenden Erfindung darin, einen elektrischen Steckverbinder bereitzustellen, der eine versatzausgleichende Kontaktierung mit einem Gegensteckverbinder ermöglicht, und der dennoch sicher mit dem Gegensteckverbinder verrastbar ist und vorzugsweise einen Berührschutz aufweist.

Der vorliegenden Erfindung liegt auch die Aufgabe zugrunde, ein elektrisches Verbindungselement mit wenigstens zwei Steckverbindern bereitzustellen, die eine versatzausgleichende Kontaktierung mit einem jeweiligen Gegensteckverbinder ermöglichen, und die dennoch sicher mit dem jeweiligen Gegensteckverbinder verrastbar sind und vorzugsweise einen Berührschutz aufweisen.

Außerdem ist es Aufgabe der Erfindung, eine elektrische Steckverbindung bereitzustellen, die eine versatzausgleichende Kontaktierung zwischen einem Steckverbinder und einem Gegensteckverbinder ermöglicht, und die dennoch sicher verrastbar ist und vorzugsweise einen Berührschutz aufweist.

Die Aufgabe wird für den elektrischen Steckverbinder mit den in Anspruch 1 aufgeführten Merkmalen gelöst. Hinsichtlich des elektrischen Verbindungselements wird die Aufgabe durch die Merkmale des Anspruchs 6 gelöst. Betreffend die elektrische Steckverbindung wird die Aufgabe durch Anspruch 8 gelöst. Die abhängigen Ansprüche und die nachfolgend beschriebenen Merkmale betreffen vorteilhafte Ausführungsformen und Varianten der Erfindung.

Es ist ein elektrischer Steckverbinder zur elektrischen Verbindung eines in den Steckverbinder mündenden elektrischen Leiters mit einem korrespondierenden elektrischen Gegensteckverbinder vorgesehen. Erfindungsgemäß weist der Steckverbinder einen Kontaktbereich auf. Vorzugsweise ist der Kontaktbereich an einem Endabschnitt des elektrischen Leiters angeordnet.

Der elektrische Leiter kann zur Ausbildung des Kontaktbereichs entsprechend bearbeitet, beispielsweise verformt sein. Auch eine spanende Bearbeitung, beispielsweise zum Einbringen einer oder mehrerer Ausnehmungen kann vorgesehen sein. Der elektrische Leiter und der Kontaktbereich können beispielsweise als einteiliges Stanz-Biege-Teil oder als Gussteil hergestellt sein.

Im Rahmen der Erfindung ist eine Einteiligkeit zwischen dem Kontaktbereich (also quasi dem "Kontaktelement" des elektrischen Steckverbinders) und dem elektrischen Leiter vorgesehen. Ein zusätzliches Bauteil zur Ausgestaltung des Kontaktbereichs kann damit entfallen.

Durch die Einteiligkeit kann vorzugsweise sichergestellt sein, dass der Kontaktbereich nicht zerstörungsfrei von dem elektrischen Leiter entfernbar ist. Die Verbindung zwischen dem Kontaktbereich und dem elektrischen Leiter kann dabei besonders robust und außerdem sehr niederohmig und in Folge zur Übertragung besonders hoher Ströme geeignet sein.

Erfindungsgemäß weist der Kontaktbereich des Steckverbinders eine Kontaktfläche auf und ist ausgebildet, um mit der Kontaktfläche eine Stirnfläche eines Gegenkontaktelements des Gegensteckverbinders zu kontaktieren.

Bei der Kontaktfläche und/oder bei der Stirnfläche kann es sich jeweils um eine vollständig zusammenhängende Fläche handeln. Die Kontaktfläche bzw. Stirnfläche kann gegebenenfalls aber auch mehrere Einzelflächen umfassen, die auf dem Kontaktbereich bzw. auf dem Gegenkontaktelement verteilt angeordnet sind. So kann einer oder können mehrere Abschnitte des Kontaktbereichs bzw. des Gegenkontaktelements als Kontaktfläche bzw. Stirnfläche verwendbar sein.

Durch die vorgeschlagene Kontaktierung der Stirnfläche bzw. Stirnseite des Gegenkontaktelements ist ein Versatzausgleich in zumindest zwei Raumrichtungen bzw. in zumindest zwei Translationsfreiheitsgraden möglich. Gleichzeitig kann aufgrund der flächigen Kontaktierung der Stirnfläche des Gegenkontaktelements eine große Fläche für die Stromübertragung bereitgestellt werden. Die elektrische Verbindung zwischen Kontaktfläche des Steckverbinders und Stirnfläche des Gegensteckverbinders kann außerdem mit technisch besonders einfachen Mitteln mit einem geeigneten Kontaktdruck beaufschlagt werden (optional), um eine besonders robuste Kontaktierung zu ermöglichen. Auch ist das Ausstatten der Steckverbindung mit einem umfassenden Berührschutz (optional) bei einer stirnseitigen Kontaktierung vergleichsweise einfach möglich.

In einer vorteilhaften Weiterbildung der Erfindung kann vorgesehen sein, dass der Kontaktbereich aus wenigstens einem plattenförmigen Endabschnitt des elektrischen Leiters ausgeformt ist.

Der plattenförmige Endabschnitt, der den Kontaktbereich ausbildet, kann eine vollständig geschlossene Fläche aufweisen, beispielsweise eine ebene oder eine gewölbte Fläche. Der plattenförmige Endabschnitt kann allerdings auch eine oder mehrere Ausnehmungen (insbesondere Durchführungen, Rücksprünge und/oder Nuten) und/oder Erhebungen (insbesondere Stege, Nasen und/oder Stifte) aufweisen.

Vorzugsweise weist der Kontaktbereich zumindest zwei sich parallel zu der Längsachse bzw. entlang der Längsachse des elektrischen Leiters erstreckende Kontaktschenkel auf, die auf ihrer dem Gegenkontaktelement zugewandten Schenkelfläche jeweils einen Teil der Kontaktfläche ausbilden, um das Gegenkontaktelement jeweils zu kontaktieren.

Die Kontaktschenkel können im Bereich des Endes des elektrischen Leiters jeweils freie Enden aufweisen. Die Kontaktschenkel sind im Bereich des Endes des elektrischen Leiters vorzugsweise allerdings miteinander verbunden. Die Kontaktschenkel können insbesondere durch zwischen jeweils zwei Kontaktschenkeln angeordnete Ausnehmungen des elektrischen Leiters ausgebildet sein.

Die Aufteilung der Kontaktfläche auf mehrere Kontaktschenkel kann von Vorteil sein, da hierdurch eine hohe Stromübertragung durch eine insgesamte große Kontaktfläche ermöglicht wird, wobei gleichzeitig ein besonders guter Berührschutz mit dem Kontaktbereich kombiniert werden kann, insbesondere wenn eines oder wenn mehrere Berührschutzelemente zwischen jeweiligen Kontaktschenkeln durch die entsprechende Ausnehmung hindurchgeführt werden.

Grundsätzlich können auch mehr als zwei Kontaktschenkel vorgesehen sein, beispielsweise drei Kontaktschenkel, vier Kontaktschenkel, fünf Kontaktschenkel oder noch mehr Kontaktschenkel, insbesondere ausgebildet durch jeweilige Ausnehmungen zwischen benachbarten Kontaktschenkeln. Bei Verwendung von mehr als zwei Kontaktschenkeln kann sich eine kammartige bzw. längsgitterartige Struktur ergeben.

Gemäß einer Weiterbildung der Erfindung kann vorgesehen sein, dass der Kontaktbereich einen Rücksprung ausbildet, um das Gegenkontaktelement innerhalb des Rücksprungs zu kontaktieren.

Durch die Kontaktierung des Gegenkontaktelements in dem Rücksprung des Kontaktbereichs kann ein optionaler, zusätzlicher Formschluss zwischen Kontaktbereich und Gegenkontaktelement bereitgestellt werden. Außerdem kann sich eine Führungsmöglichkeit ergeben, die es einem Monteur erleichtert, die Steckverbindung zu schließen.

Alternativ oder zusätzlich können auch Erhebungen bzw. Vorsprünge vorgesehen sein. Auch das Gegenkontaktelement kann einen entsprechenden Rücksprung und/oder eine entsprechende Erhebung aufweisen.

Vorzugsweise ist an jedem der Kontaktschenkel ein Rücksprung vorgesehen, angrenzend an eine zwischen den Kontaktschenkeln vorgesehene Ausnehmung in dem elektrischen Leiter (insbesondere in der Art einer Stufe). Beispielsweise kann die zwischen den Kontaktschenkeln verlaufende Ausnehmung des elektrischen Leiters stufig ausgebildet sein bzw. an jedem Kontaktschenkel eine Stufe aufweisen, auf der das Gegenkontaktelement mit dem Zweck der Kontaktierung aufzuliegen vermag. Vorzugsweise erstreckt sich der Rücksprung an dem jeweiligen Kontaktschenkel parallel zu der Längsachse des Kontaktschenkels. Grundsätzlich kann sich der Rücksprung allerdings auch orthogonal zu der Längsachse oder sogar schräg hierzu erstrecken.

Gemäß einer Ausgestaltung der Erfindung kann vorgesehen sein, dass der elektrische Steckverbinder ein Steckverbindergehäuse aufweist und/oder dass der Gegensteckverbinder ein Gegensteckverbindergehäuse aufweist.

Das Steckverbindergehäuse bzw. das Gegensteckverbindergehäuse kann ausgebildet sein, um einen Berührschutz für die leitfähigen Komponenten des Steckverbinders bzw. des Gegensteckverbinders bereitzustellen, insbesondere einen Berührschutz für den elektrischen Leiter, den Kontaktbereich und/oder das Gegenkontaktelement.

Das Steckverbindergehäuse und das Gegensteckverbindergehäuse können optional eine gegenseitige Verrastung und/oder sonstige Befestigungsmittel aufweisen. Eine Befestigung zwischen Steckverbindergehäuse und Gegensteckverbindergehäuse bzw. zwischen Steckverbinder und Gegensteckverbinder kann durch beliebige formschlüssige, kraftschlüssige und/oder stoffschlüssige Befestigungsmittel vorgesehen sein. Vorzugsweise ist eine Verrastung der Steckverbindung vorgesehen, wobei der Steckverbinder, insbesondere das Steckverbindergehäuse, erste Rastmittel aufweisen kann (z. B. Rastnasen, Rastnuten, Vorsprünge, Rücksprünge, Kulissen, Kulissensteine, Nuten oder Führungsschienen), und wobei der Gegensteckverbinder, insbesondere das Gegensteckverbindergehäuse, mit den ersten Rastmitteln korrespondierende, zweite Rastmittel aufweisen kann.

Bei dem Steckverbindergehäuse und/oder Gegensteckverbindergehäuse kann es sich insbesondere um ein Kunststoffgehäuse handeln, vorzugsweise aus einem steifen Kunststoff bzw. aus Hartplastik. Das Steckverbindergehäuse und/oder Gegensteckverbindergehäuse kann vorzugsweise mittels eines Spritzgussverfahrens oder eines Tiefziehverfahrens hergestellt werden.

Es kann vorgesehen sein, dass das Steckverbindergehäuse und/oder das Gegensteckverbindergehäuse mehrteilig ausgebildet ist. Das mehrteilige Steckverbindergehäuse und/oder das mehrteilige Gegensteckverbindergehäuse kann beispielsweise eine Oberschale und eine mit der Oberschale verbindbare, insbesondere verrastbare, Unterschale aufweisen. Die Oberschale kann hierzu insbesondere eine Rastausnehmung und die Unterschale eine mit der Rastausnehmung korrespondierende Rastnase aufweisen, um in dem mit der Oberschale verbundenen Zustand in der Rastausnehmung zu verrasten.

Durch Verwendung eines mehrteiligen Steckverbindergehäuses bzw. Gegensteckverbindergehäuses kann der Berührschutz weiter verbessert sein. Ferner können sich vorteilhafte, benutzerfreundliche Montagemöglichkeiten ergeben.

Erfindungsgemäß ist vorgesehen, dass der elektrische Steckverbinder wenigstens ein Federelement aufweist das ausgebildet ist, um den elektrischen Leiter mit einer in Richtung auf den Gegensteckverbinder weisende Federkraft zu beaufschlagen, vorzugsweise in seinem Kontaktbereich.

Durch den von dem Federelement verursachten Kontaktdruck kann ein besonders guter elektrischer Kontakt zwischen dem Kontaktbereich und dem Gegenkontaktelement bereitgestellt werden. Die Steckverbindung kann sich somit für eine besonders hohe Stromübertragung eignet und insbesondere robust gegenüber äußeren Einflüssen sein, wie beispielsweise Vibrationen oder Erschütterungen.

Es kann alternativ oder zusätzlich auch vorgesehen sein, dass der Gegensteckverbinder wenigstens ein Federelement aufweist, insbesondere ein Federelement, um das Gegenkontaktelement mit einer in Richtung auf den Steckverbinder weisenden Federkraft zu beaufschlagen. Merkmale und Vorteile, die sich vorliegend auf das wenigstens eine Federelement des Steckverbinders beziehen, können demnach analog auch auf ein entsprechendes Federelement des Gegensteckverbinders bezogen verstanden werden - und umgekehrt.

Um einen konstanten Kontaktdruck über die gesamte Kontaktierungsfläche zu erhalten, kann vorgesehen sein, dass sich das wenigstens eine Federelement möglichst entlang der gesamten Längserstreckung der Kontaktfläche bzw. der Stirnfläche erstreckt, oder dass mehrere einzelne Federelemente entsprechend verteilt angeordnet sind.

Gemäß einer Weiterbildung der Erfindung kann vorgesehen sein, dass das wenigstens eine Federelement zwischen dem Steckverbindergehäuse, vorzugsweise der Oberschale des mehrteiligen Steckverbindergehäuses, und dem elektrischen Leiter bzw. dem Kontaktbereich angeordnet ist. Insbesondere eine Anordnung des Federelements zwischen Steckverbindergehäuse bzw. Oberschale und dem Kontaktbereich kann eine technisch einfache Möglichkeit sein, um einen ausreichenden und gut kontrollierbaren Kontaktdruck zwischen Kontaktbereich und Gegenkontaktelement zu erzeugen. Das Steckverbindergehäuse kann optional in dem Bereich, in dem sich das Federelement abstützt, verstärkt sein.

Die Erfindung betrifft auch ein elektrisches Verbindungselement, aufweisend wenigstens zwei elektrische Steckverbinder gemäß den vorstehenden und nachfolgenden Ausführungen und den elektrischen Leiter, wobei an zumindest zwei Enden des elektrischen Leiters ein jeweiliger Steckverbinder angeordnet ist.

Das vorgeschlagene Verbindungselement eignet sich insbesondere für die elektrische Verbindung von Batteriezellen bzw. Batteriemodulen untereinander. Das Verbindungselement kann insbesondere ausgebildet sein, um die Pole von zwei Batterien miteinander zu verbinden. Das Verbindungselement kann allerdings auch ausgebildet sein, um einen Pol einer Batterie mit einer sonstigen elektrischen Einrichtung zu verbinden, beispielsweise mit einem elektrischen Verbraucher, wie einem Elektromotor. Das Verbindungselement kann außerdem auch ausgebildet sein, um mehr als zwei Batterien miteinander zu verbinden, beispielsweise drei, vier, fünf, sechs oder noch mehr Batterien in Parallelschaltung und/oder Serienschaltung zu verbinden, insbesondere mittels jeweiliger Steckverbinder, die entlang des elektrischen Leiters verteilt angeordnet sind, beispielsweise an den Enden eines mehrfach verzweigten elektrischen Leiters. Es kann auch vorgesehen sein, dass sich aus einem Steckverbinder mehrere elektrische Leiter erstrecken, beispielsweise um einen T- bzw. Y-förmigen Steckverbinder bereitzustellen.

In einer Weiterbildung des Verbindungselements kann vorgesehen sein, dass der elektrische Leiter als Kabel mit im Bereich der Enden kompaktierten Einzeldrähten oder als Stromschiene ausgebildet ist.

Der elektrische Leiter, der Kontaktbereich und/oder das Gegenkontaktelement können beispielsweise aus Kupfer ausgebildet sein. Auch die Verwendung eines anderen Werkstoffs ist möglich, beispielsweise die Verwendung von Aluminium.

In einer vorteilhaften Weiterbildung der Erfindung kann vorgesehen sein, dass der Kontaktbereich und/oder die Stirnfläche des Gegenkontaktelements eine Beschichtung aufweisen, vorzugsweise eine korrosionsbeständige Beschichtung, beispielsweise eine Kupferbeschichtung oder eine Silberbeschichtung.

Auf diese Weise kann eine Verschlechterung des Übergangswiderstands durch eine Oxidation vermieden werden (insbesondere, wenn Aluminium als Werkstoff für den Kontaktbereich bzw. das Gegenkontaktelement verwendet wird). Die Beschichtung kann im Kontaktierungsbereich bzw. auf der Kontaktfläche vorzugsweise als Plättchen aus einem korrosionsbeständigen Material ausgebildet sein, das beispielsweise mittels Ultraschallschweißen oder einer sonstigen Verbindungstechnik aufgebracht wird. Beispielsweise kann eine Beschichtung aus Kupfer oder Silber bzw. kann ein Kupferplättchen, ein Silberplättchen oder ein silberbeschichtetes Kupferplättchen vorgesehen sein.

Die genannten Einzeldrähte des Kabels können beispielsweise miteinander kaltverschweißt sein, um vorzugsweise einen plattenförmigen Endabschnitt auszubilden. Die Verwendung eines Kabels mit kompatiblen Einzeldrähten kann von Vorteil sein, da das Kabel durch einen üblicherweise vorhandenen Kabelmantel bereits einen Berührschutz zwischen den Steckverbindern bereitstellen kann.

Bei Verwendung einer Stromschiene kann optional ein einteiliges oder mehrteiliges Abdeckelement aus einem elektrisch nichtleitenden Material vorgesehen sein, um die Stromschiene zwischen den Kontaktbereichen bzw. zwischen den Steckverbindern gegen eine unbeabsichtigte Berührung zu sichern.

Die Erfindung betrifft auch einen elektrischen Gegensteckverbinder zur elektrischen Verbindung eines mit dem Gegensteckverbinder verbundenen Anschlusselements einer elektrischen Einrichtung mit einem korrespondierenden elektrischen Steckverbinder (insbesondere, aber nicht ausschließlich, dem Steckverbinder gemäß den vorstehenden und nachfolgenden Ausführungen). Der Gegensteckverbinder weist ein Gegenkontaktelement mit einer Stirnfläche auf die ausgebildet ist, um eine Kontaktfläche eines Kontaktbereichs des Steckverbinders zu kontaktieren.

Das Gegenkontaktelement kann mit dem Anschlusselement bzw. mit der elektrischen Einrichtung (beispielsweise einem Batteriepol oder einer Stromschiene eines Batteriemoduls) kraftschlüssig, beispielsweise durch Kontaktdruck, stoffschlüssig, beispielsweise durch Ultraschallschweißen, und/oder formschlüssig verbunden sein. Es kann auch vorgesehen sein, dass das Gegenkontaktelement mit dem Anschlusselement einteilig ausgebildet ist, beispielsweise als Stanz-Biege-Teil oder als Gussteil.

Die Erfindung betrifft außerdem eine elektrische Steckverbindung, aufweisend einen elektrischen Steckverbinder gemäß den vorstehenden und nachfolgenden Ausführungen und den elektrischen Gegensteckverbinder. Der Gegensteckverbinder ist mit einer elektrischen Einrichtung verbunden, um im verbundenen Zustand der Steckverbindung eine elektrische Verbindung zwischen dem elektrischen Leiter und der elektrischen Einrichtung herzustellen.

Es kann vorgesehen sein, dass die elektrische Einrichtung ein Anschlusselement aufweist, das das Gegenkontaktelement ausbildet oder mit dem das Gegenkontaktelement elektrisch und vorzugsweise mechanisch verbunden ist.

Die vorgeschlagene elektrische Steckverbindung eignet sich besonders vorteilhaft als Hochvoltsteckverbindung, insbesondere zur Verwendung im Rahmen der Elektromobilität. Auf vorteilhafte Weise kann durch die elektrische Steckverbindung beispielsweise ein Zellmodulverbinder-Interface zur Verbindung von Batteriezellmodulen bereitgestellt werden, bei besonders vorteilhafter Ausgestaltung der Kontaktierung.

Vorzugsweise wird durch die vorgeschlagene Steckverbindung ein Toleranzausgleich in allen translatorischen Freiheitsgraden im Kontaktierungsbereich ermöglicht. Auch ein Toleranzausgleich zum Ausgleich von einem, zwei oder drei Rotationsfreiheitsgraden kann vorgesehen sein.

Bei der elektrischen Einrichtung kann es sich insbesondere um eine Batterie, beispielsweise eine Batterie eines Fahrzeugs, und bei dem Anschlusselement um einen Batteriepol der Batterie handeln. Es kann sich bei der elektrischen Einrichtung aber auch um einen elektrischen Verbraucher, wie einen Elektromotor, ein Ladegerät oder um eine sonstige elektrische Einrichtung handeln.

Bei dem Anschlusselement kann es sich beispielsweise auch um eine Stromschiene oder um einen elektrischen Leiter (z. B. eines Kabels) handeln.

In einer Weiterbildung der Erfindung kann vorgesehen sein, dass das Gegenkontaktelement wenigstens eine Metallplatte aufweist. Die wenigstens eine Metallplatte kann an einer dem Kontaktbereich zugewandten Seite zumindest einen Teil der Stirnfläche ausbildet, um den Kontaktbereich zu kontaktieren.

Grundsätzlich kann das Gegenkontaktelement einen beliebigen Querschnitt aufweisen, und insbesondere auch als gefüllter, rechteckiger oder zylindrischer Körper ausgebildet sein.

Es kann vorgesehen sein, dass sich die wenigstens eine Metallplatte ausgehend von einer Basis erstreckt. Vorzugsweise sind wenigstens zwei Metallplatten vorgesehen, die von einer gemeinsamen Basis ausgehen. In einer besonders vorteilhaften Variante sind dabei zumindest zwei Metallplatten in U-förmiger Anordnung vorgesehen.

Die Metallplatten verlaufen vorzugsweise parallel zueinander.

Die Anzahl Metallplatten kann vorzugsweise der Anzahl Kontaktschenkel entsprechen, wobei vorzugsweise jeweils eine Metallplatte einen Kontaktschenkel mit ihrer Stirnseite bzw. Stirnfläche kontaktiert, wenn die Steckverbindung geschlossen ist. Durch die Aufteilung der Stromübertragung auf mehrere Metallplatten bzw. Kontaktschenkel lässt sich ein Berührschutz besonders einfach und sicher in die Steckverbindung integrieren, beispielsweise durch zwei benachbart zu den einzelnen Metallplatten und/oder Kontaktschenkel eingefügte Berührschutzelemente.

In einer vorteilhaften Weiterbildung der Erfindung kann vorgesehen sein, dass die Kontaktfläche des Kontaktbereichs gewölbt und die Stirnfläche des Gegenkontaktelements zu der Wölbung der Kontaktfläche komplementär ausgebildet ist. Die Kontaktfläche bzw. die zur Kontaktierung vorgesehene Stirnfläche kann sphärisch ausgeformt sein.

Die Kontaktfläche kann konkav und die Stirnfläche konvex gewölbt sein - oder umgekehrt. Durch die gewölbte Ausgestaltung der Kontaktfläche bzw. der Stirnfläche kann ein Versatzausgleich in Steckrichtung der Steckverbindung ermöglicht werden. Insbesondere kann ein Verkippen zwischen Steckverbinder und Gegensteckverbinder ausgeglichen werden.

In einer Weiterbildung der Erfindung kann vorgesehen sein, dass die Kontaktfläche des Kontaktbereichs und die Stirnfläche des Gegenkontaktelements eine gegenseitige Verzahnung oder Riffelung ausbilden. Der Kontaktbereich und das Gegenkontaktelement können hierzu einzelne, nebeneinander angeordnete Zähne aufweisen, wobei die Zähne des Kontaktbereichs zwischen die Zähne des Gegenkontaktelements einzudringen vermögen. Vorzugsweise kann die Verzahnung Zähne mit linearen, spitz zulaufend Zahnflanken aufweisen.

Durch eine Verzahnung kann die Steckverbindung gegenüber mechanischen Kräften von außen, beispielsweise Vibrationen oder Erschütterungen, robuster ausgestaltet sein. Auch ein Versatzausgleich zwischen Steckverbinder und Gegensteckverbinder kann, insbesondere bei Verwendung von Zähnen mit linearen, spitz zulaufend Zahnflanken, verbessert sein. Durch Verwendung einer gegenseitigen Verzahnung kann gegebenenfalls auch der erforderliche Kontaktdruck, beispielsweise der mittels dem wenigstens einen Federelement aufzubringende Kontaktdruck, verringert sein.

In der einfachsten Ausgestaltung der Verzahnung kann eine jeweilige Folge von einzelnen Zähnen entlang der Längsrichtung des elektrischen Leiters verlaufend angeordnet sein. Bereits hierdurch ist zumindest ein eindimensionaler bis zweidimensionaler Versatzausgleich möglich.

In einer vorteilhaften Weiterbildung der Erfindung kann vorgesehen sein, dass die Zähne auf der Kontaktfläche und auf der Stirnfläche jeweilige Erhebungen ausbilden.

Die Verzahnung bzw. die einzelnen Zähne können auf dem elektrischen Leiter / auf der Kontaktfläche und/oder auf der Stirnfläche vorzugsweise aufgeprägt werden, können gegebenenfalls aber auch durch spanende Bearbeitung eingebracht werden.

In einer vorteilhaften Weiterbildung der Erfindung kann vorgesehen sein, dass die Zähne auf der Kontaktfläche und auf der Stirnfläche jeweils dem Verlauf eines Kreisbogens folgen. Vorzugsweise sind die Radien der jeweiligen Kreisbögen der einzelnen Zähne identisch.

Es kann vorgesehen sein, dass die Verzahnung innerhalb eines bestimmten Winkelsegments gebogen verläuft. Auf diese Weise kann ein zweidimensionaler Versatzausgleich möglich sein. Zum Ausgleich des Versatzes in der von der Längsrichtung des elektrischen Leiters abweichenden Richtung kann der Kontaktbereich bzw. der Steckverbinder relativ zu dem Gegenkontaktelement bzw. Gegensteckverbinder entlang des Kreisbogens verdreht werden.

Insbesondere eine Kombination einer Verzahnung, die einem Kreisbogen folgt mit einer gewölbten Kontaktfläche bzw. Stirnfläche hat sich als besonders vorteilhaft herausgestellt, da auf diese Weise auch ein vertikaler Versatz (in Steckrichtung) kompensierbar sein kann. Der Kontaktbereich kann hierzu relativ zu dem Gegenkontaktelement verkippt werden.

In einer vorteilhaften Weiterbildung der Erfindung kann vorgesehen sein, dass das Gegenkontaktelement Vorsprünge und/oder Aussparungen aufweist, die ausgebildet sind, um von dem wenigstens ein Federelement des Steckverbinders hintergriffen zu werden, um den elektrischen Leiter bzw. den Kontaktbereich und das Gegenkontaktelement gegenseitig zu verspannen.

Beispielsweise kann das wenigstens eine Federelement zwei Schenkel aufweisen, mit deren Enden es in zwei Längsnuten des Gegenkontaktelements einfügbar ist. Auf diese Weise kann ein Kraftfluss zwischen dem Federelement und dem Kontaktbereich sowie dem Gegenkontaktelement realisiert werden, ohne einen zusätzlichen Krafteintrag auf das Steckverbindergehäuse und/oder auf das Gegensteckverbindergehäuse zu verursachen. Eine Belastung des Steckverbindergehäuses bzw. Gegensteckverbindergehäuses wird damit vermieden. Das Federelement kann beispielsweise C-förmig ausgebildet sein.

Um ein leichteres Einfügen der beiden Enden des wenigstens einen Federelements in die Längsnuten des Gegensteckverbindergehäuses zu ermöglichen kann vorgesehen sein, dass die Längsnuten eine Fangtrichterfunktion ausbilden.

Das wenigstens eine Federelement kann ausgebildet sein, um zusammen mit der Oberschale des Steckverbindergehäuses beim Schließen des Steckverbindergehäuses gleichzeitig über den Kontaktbereich und das Gegenkontaktelement geschoben zu werden.

Die erfindungsgemäße Steckverbindung kann besonders vorteilhaft innerhalb eines Fahrzeugs, insbesondere eines Kraftfahrzeugs, verwendet werden. Der Begriff "Fahrzeug" beschreibt dabei jegliches Fortbewegungsmittel, insbesondere Fahrzeuge zu Lande, zu Wasser oder in der Luft, eingeschlossen auch Raumfahrzeuge. Mögliche Einsatzgebiete sind insbesondere Hochvoltsteckverbindungen, vor allem bei Elektro- und/oder Hybridfahrzeugen. Die erfindungsgemäße Steckverbindung eignet sich allerdings für beliebige Anwendungen innerhalb der gesamten Elektrotechnik und ist nicht auf den Einsatz in der Fahrzeugtechnik und auch nicht auf den Einsatz in der Hochvolttechnik beschränkt zu verstehen.

Die Erfindung betrifft auch ein Verfahren zur Herstellung eines elektrischen Steckverbinders gemäß den vorstehenden und nachfolgenden Ausführungen.

Merkmale, die im Zusammenhang mit einem der Gegenstände der Erfindung, namentlich gegeben durch den erfindungsgemäßen elektrischen Steckverbinder, das erfindungsgemäße elektrische Verbindungselement, den erfindungsgemäßen elektrischen Gegensteckverbinder, die erfindungsgemäße elektrische Steckverbindung und das erfindungsgemäße Verfahren zur Herstellung des elektrischen Steckverbinders beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt. Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Nachfolgend werden Ausführungsbeispiele der Erfindung anhand der Zeichnung näher beschrieben. Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden. In den Figuren sind funktionsgleiche Elemente mit denselben Bezugszeichen versehen.

Es zeigen schematisch:
- Figur 1: eine perspektivische Darstellung eines erfindungsgemäßen elektrischen Verbindungselements zur Verbindung von zwei elektrischen Einrichtungen, mit an den beiden Enden des Verbindungselements angeordneten elektrischen Steckverbindern zur Kontaktierung von elektrischen Gegensteckverbindern der jeweiligen elektrischen Einrichtung;
- Figur 2: eine perspektivische Darstellung einer der elektrischen Steckverbindungen der Figur 1, ohne das Steckverbindergehäuse;
- Figur 3: eine perspektivische Darstellung der Verbindung zwischen Kontaktbereich und Gegenkontaktelement einer der Steckverbindungen der Figur 1;
- Figur 4: ein beispielhaftes Gegenkontaktelement in einer perspektivischen Einzeldarstellung;
- Figur 5: eine Schnittdarstellung einer der elektrischen Steckverbindungen der Figur 1 zur Darstellung eines Federelements zwischen Steckverbindergehäuse und Kontaktbereich;
- Figur 6: eine perspektivische Darstellung eines Federelements zur Gegenseitigen Verspannung zwischen Kontaktbereich und Gegenkontaktelement;
- Figur 7: ein Kontaktbereich und ein Gegenkontaktelement mit einer gegenseitigen Verzahnung, gemäß einer ersten Variante in einer perspektivischen Darstellung;
- Figur 8: der Kontaktbereich der Figur 7 in einer Seitenansicht;
- Figur 9: der Kontaktbereich der Figur 7 in einer Draufsicht auf die Kontaktfläche;
- Figur 10: ein Kontaktbereich zur Verbindung mit einem Gegenkontaktelement gemäß Figur 7 mit einer in den Kontaktbereich eingeprägten Verzahnung;
- Figur 11: das Gegenkontaktelement der Figur 7 in einer Seitenansicht;
- Figur 12: das Gegenkontaktelement der Figur 7 in einer Draufsicht auf die Stirnfläche;
- Figur 13: ein Beispiel einer versatzfreien Verbindung (neutrale Stellung) zwischen Kontaktbereich und Gegenkontaktelement gemäß Figur 7 in einer Seitenansicht;
- Figur 14: ein Beispiel einer Verbindung zwischen Kontaktbereich und Gegenkontaktelement gemäß Figur 7 mit einem translatorischen Versatz zwischen Kontaktbereich und Gegenkontaktelement in Längsrichtung des elektrischen Leiters in einer Seitenansicht;
- Figur 15: ein Beispiel einer Verbindung zwischen Kontaktbereich und Gegenkontaktelement gemäß Figur 7 mit einem rotativen Versatz zwischen Kontaktbereich und Gegenkontaktelement in einer Draufsicht;
- Figur 16: ein Beispiel einer Verbindung zwischen Kontaktbereich und Gegenkontaktelement gemäß Figur 7 mit einem weiteren rotativen Versatz zwischen Kontaktbereich und Gegenkontaktelement in einer Seitenansicht;
- Figur 17: ein Kontaktbereich mit einer Verzahnung zur Verbindung mit einem korrespondierenden Gegenkontaktelement, gemäß einer zweiten Variante in einer Draufsicht auf die Kontaktfläche;
- Figur 18: den Kontaktbereich der Figur 17 in einer seitlichen Schnittdarstellung;
- Figur 19: ein Gegenkontaktelement zur Verbindung mit dem Kontaktbereich der Figur 17 in einer ersten Seitenansicht;
- Figur 20: das Gegenkontaktelement der Figur 19 in einer zweiten Seitenansicht;
- Figur 21: das Gegenkontaktelement der Figur 19 in einer Draufsicht auf die Stirnfläche;
- Figur 22: ein Beispiel einer versatzfreien Verbindung (neutrale Stellung) zwischen Kontaktbereich gemäß Figur 17 und Gegenkontaktelement gemäß Figur 19 in einer Seitenansicht;
- Figur 23: ein Beispiel einer Verbindung zwischen Kontaktbereich gemäß Figur 17 und Gegenkontaktelement gemäß Figur 19 mit einem translatorischen Versatz zwischen Kontaktbereich und Gegenkontaktelement in Längsrichtung des elektrischen Leiters in einer Seitenansicht;
- Figur 24: ein Beispiel einer Verbindung zwischen Kontaktbereich gemäß Figur 17 und Gegenkontaktelement gemäß Figur 19 mit rotativem Versatz zwischen Kontaktbereich und Gegenkontaktelement in einer Draufsicht; und
- Figur 25: ein Beispiel einer Verbindung zwischen Kontaktbereich gemäß Figur 17 und Gegenkontaktelement gemäß Figur 19 mit einem weiteren rotativen Versatz zwischen Kontaktbereich und Gegenkontaktelement in einer Seitenansicht.

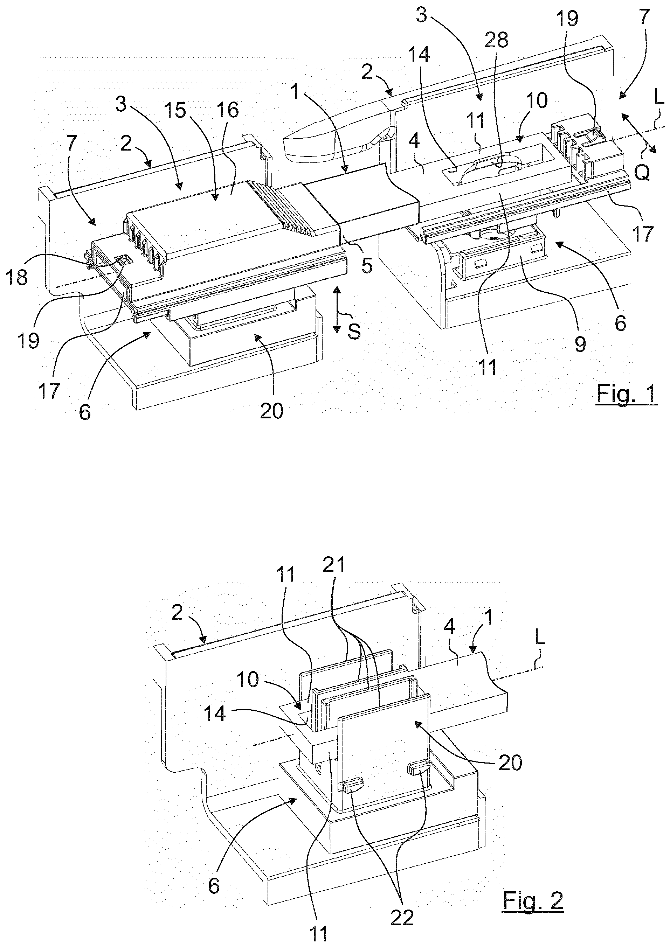

Figur 1 zeigt in perspektivischer Darstellung ein elektrisches Verbindungselement 1 zur Verbindung von zwei elektrischen Einrichtungen 2. Das Verbindungselement 1 weist an seinen beiden Enden jeweils einen elektrischen Steckverbinder 3 auf. Bei den elektrischen Einrichtungen 2 kann es sich beispielsweise um Batteriemodule handeln, die durch das Verbindungselement 1 miteinander verschaltet werden sollen. Grundsätzlich kann es sich allerdings um beliebige elektrische Einrichtungen 2 handeln.

Das Verbindungselement 1 weist einen als Stromschiene ausgebildeten elektrischen Leiter 4 auf. Alternativ zur Verwendung einer Stromschiene kann beispielsweise auch ein elektrisches Kabel mit im Bereich der beiden Enden kompaktierten Einzeldrähten, beispielsweise kaltverschweißten Einzeldrähten, vorgesehen sein. Zur Bereitstellung eines geeigneten Berührschutzes kann zwischen den beiden Steckverbindern 3 ein elektrisch nichtleitendes Abdeckelement 5 vorgesehen sein, das den elektrischen Leiter 4 umhüllt.

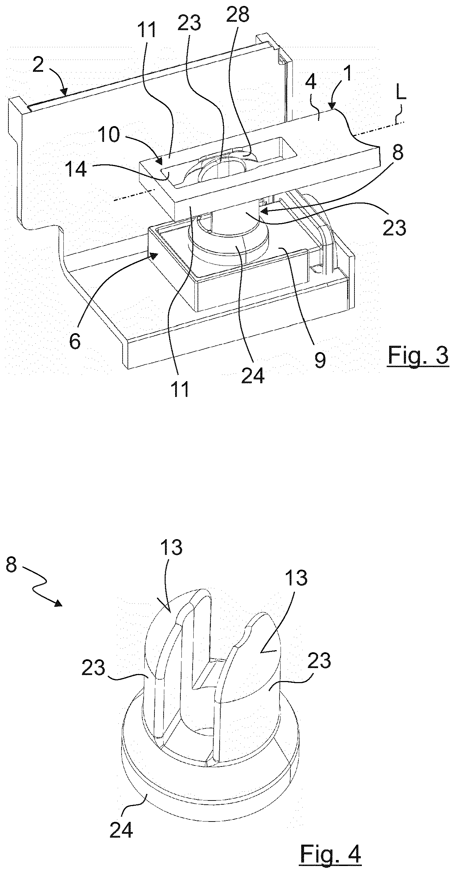

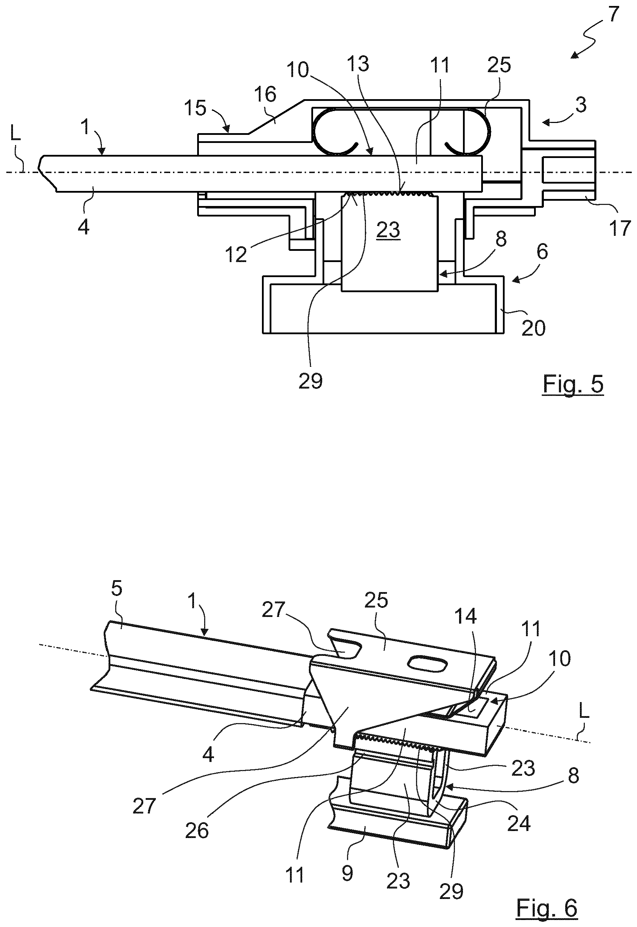

Der jeweilige elektrische Steckverbinder 3 ist ausgebildet, den elektrischen Leiter 4 über einen elektrischen Gegensteckverbinder 6 mit der elektrischen Einrichtung 2 zu verbinden. Der Steckverbinder 3 bildet somit mit dem Gegensteckverbinder 6 eine jeweilige elektrische Steckverbindung 7 aus (vgl. auch Figur 5), wobei der Gegensteckverbinder 6 über ein Gegenkontaktelement 8 (vgl. beispielsweise Figuren 3 und 4) mit einem Anschlusselement 9 (beispielsweise einem Batteriepol) der elektrischen Einrichtung 2 (beispielsweise ein Batteriemodul) verbunden ist.

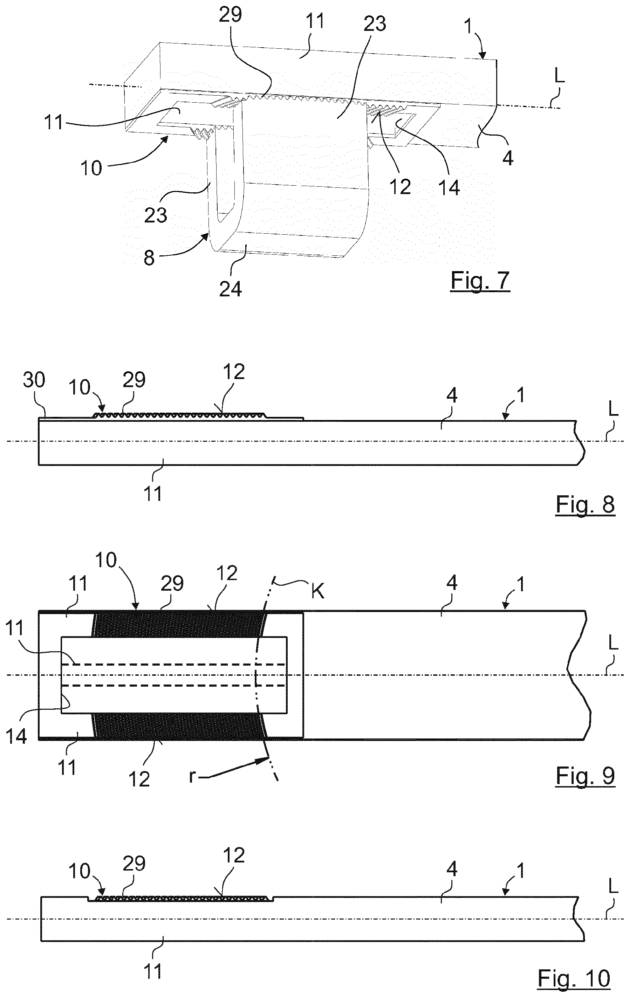

Zur Verbindung mit dem Gegenkontaktelement 8 weist der elektrische Steckverbinder 3 einen einteilig mit dem elektrischen Leiter 4 ausgebildeten Kontaktbereich 10 auf. Der Kontaktbereich 10 kontaktiert das Gegenkontaktelement 8 des Gegensteckverbinders 6. Der Kontaktbereich 10 ist vorzugsweise aus einem plattenförmigen Endabschnitt des elektrischen Leiters 4 ausgeformt und weist zumindest zwei sich entlang der Längsachse L des elektrischen Leiters 4 erstreckende Kontaktschenkel 11 auf, die auf ihrer dem Gegenkontaktelement 8 zugewandten Schenkelfläche (vgl. insbesondere Figur 7) jeweils einen Teil einer Kontaktfläche 12 ausbilden, um das Gegenkontaktelement 8 jeweils auf einer Stirnfläche 13 (vgl. insbesondere Figur 4) zu kontaktieren.

Die Kontaktschenkel 11 sind vorzugsweise durch eine zwischen den Kontaktschenkeln 11 angeordnete Ausnehmung 14 ausgebildet und im Bereich der Enden des elektrischen Leiters 4 miteinander verbunden. Die Kontaktschenkel 11 können allerdings auch freie Enden aufweisen. In Figur 9 ist strichliniert ein dritter Kontaktschenkel 11 angedeutet, um beispielhaft zu verdeutlichen, dass grundsätzlich beliebig viele Kontaktschenkel 11 vorgesehen sein können.

Der elektrische Steckverbinder 3 weist ein Steckverbindergehäuse 15 auf, das in den Ausführungsbeispielen mehrteilig ausgebildet ist und eine Oberschale 16 und eine mit der Oberschale 16 verrastbare Unterschale 17 aufweist (vgl. insbesondere Figur 1 und Figur 5). Zur Verrastung kann beispielsweise die Oberschale 16 eine Rastausnehmung 18 und die Unterschale 17 eine korrespondierende Rastnase 19 aufweisen. Ferner kann die Oberschale 16 auf der Unterschale 17 verschiebbar sein, in der Art einer Schienenführung.

Der Gegensteckverbinder 6 weist ein Gegensteckverbindergehäuse 20 auf (vgl. insbesondere die Figuren 1, 2 und 5). Die Oberschale 16 des Steckverbindergehäuses 15 und das Gegensteckverbindergehäuse 20 sind zur besseren Darstellung des elektrischen Leiters 4 und des Kontaktbereichs 10 bei der in Figur 1 rechts dargestellten Steckverbindung 7 ausgeblendet.

Das Steckverbindergehäuse 15 und/oder das Gegensteckverbindergehäuse 20 können ausgebildet sein, um einen Berührschutz für die leitfähigen Teile der Steckverbindung 7 bereitzustellen. Ein besonders vorteilhafter Berührschutz kann bereitgestellt werden, wenn die Kontaktfläche 12 in zwei oder mehr Kontaktschenkel 11 aufgeteilt ist, wie bereits beschreiben. In diesem Fall können einzelne Berührschutzelemente 21 (vgl. Figur 2) benachbart zu den Kontaktschenkeln 11 hindurchgeführt werden, wobei dennoch eine hohe Stromübertragung möglich ist.

Zur Sicherstellung, dass die Steckverbindung 7 nach dem Herstellen der Verbindung sicher geschlossen bleibt, kann eine Verriegelung zwischen dem elektrischen Steckverbinder 3 und dem Gegensteckverbinder 6 vorgesehen sein, insbesondere eine Verriegelung zwischen dem Steckverbindergehäuse 15 und dem Gegensteckverbindergehäuse 20. Das Steckverbindergehäuse kann zu diesem Zweck wenigstens ein erstes Rastmittel aufweisen (in den Figuren nicht näher dargestellt), beispielsweise stirnseitige Öffnungen und/oder L-förmig umgeschlagene Seitenwände. Das Gegensteckverbindergehäuse 20 kann mit den ersten Rastmittel korrespondierende zweite Rastmittel aufweisen, beispielsweise seitlich von dem Gegensteckverbindergehäuse 20 abstehende Erhebungen 22 (vgl. Figur 2), die dann beispielsweise von den umgeschlagenen Seitenwänden des Steckverbindergehäuses 15 umgriffen und optional zusätzlich in die stirnseitigen Öffnungen des Steckverbindergehäuses 15 aufgenommen werden können. Ferner kann auch die Rastverbindung (z. B. Rastausnehmung 18 und Rastnase 19) zwischen Oberschale 16 und Unterschale 17 des Steckverbindergehäuses 15 zu der Verriegelung der Steckverbindung beitragen (vgl. Figur 1).

Es kann vorgesehen sein, dass das Gegenkontaktelement 8 wenigstens eine Metallplatte 23 aufweist. In den Ausführungsbeispielen sind zwei sich von einer gemeinsamen Basis 24 erstreckende Metallplatten 23 vorgesehen (vgl. beispielsweise Figur 4 und Figur 7), wobei die Metallplatten 23 an einer dem Kontaktbereich 10 zugewandten Seite zumindest einen Teil der Stirnfläche 13 ausbilden, um den Kontaktbereich 10 zu kontaktieren.

Zur Bereitstellung eines hohen Kontaktdrucks und damit einer guten Kontaktierung kann wenigstens ein Federelement 25 vorgesehen sein (vgl. Figuren 5 und 6), das ausgebildet ist, um den Kontaktbereich 10 mit einer in Richtung auf den Gegensteckverbinder 6 weisenden Federkraft zu beaufschlagen. Das wenigstens eine Federelement 25 ist dabei vorzugsweise zwischen dem Steckverbindergehäuse 15, in den Ausführungsbeispielen zwischen der Oberschale 16 des mehrteiligen Steckverbindergehäuses 15, und dem Kontaktbereich 10 angeordnet.

Es kann beispielsweise eine wie in Figur 5 dargestellte Anordnung vorgesehen sein, wonach sich das wenigstens eine Federelement 25 zur Beaufschlagung des Kontaktbereichs 10 mit der Federkraft innenseitig an der Oberschale 16 des Steckverbindergehäuses 15 abstützt.

Zur Entlastung des Steckverbindergehäuses 15 kann allerdings auch eine in Figur 6 dargestellte Ausgestaltung des Federelements 25 vorgesehen sein. Dabei kann das Gegenkontaktelement 8 Vorsprünge und/oder Aussparungen aufweisen, beispielsweise die dargestellten Längsnuten 26, die ausgebildet sind, um von dem wenigstens einen Federelement 25 des Steckverbinders 3 hintergriffen zu werden, um den Kontaktbereich 10 und das Gegenkontaktelement 8 unmittelbar gegenseitig zu verspannen. Das Federelement 25 kann hierzu zwei Seitenschenkel 27 aufweisen, deren Enden in die Längsnuten 26 des Gegenkontaktelements 8 einführbar sind. Optional können die Längsnuten 26 einen trichterförmigen Einführabschnitt aufweisen (nicht dargestellt). Es kann vorgesehen sein, das in Figur 6 dargestellte Federelement 25 zusammen mit dem Steckverbindergehäuse 15, insbesondere der Oberschale 16 des mehrteiligen Steckverbindergehäuses 15, bis in seine Endposition, in der das Federelement 25 den Kontaktbereich 10 und das Gegenkontaktelement 8 verspannt, zu verschieben.

Wie in den Ausführungsbeispielen der Figuren 1 bis 4 sowie 17 bis 25 dargestellt, kann der Kontaktbereich 10 einen oder mehrere Rücksprünge 28 aufweisen, um das Gegenkontaktelement 8 innerhalb des Rücksprungs 28 zu kontaktieren. Die Ausnehmung 14 kann hierzu beispielsweise stufig ausgebildet sein. Auch eine Ausgestaltung ohne Rücksprung 28 kann allerdings vorgesehen sein (vgl. beispielsweise Figur 5 sowie die Figuren 7 bis 16).

Ferner kann vorgesehen sein, dass die Kontaktfläche 12 des Kontaktbereichs 10 gewölbt und die Stirnfläche 13 des Gegenkontaktelements 8 zu der Wölbung der Kontaktfläche 12 komplementär ausgebildet ist, wie in dem Ausführungsbeispiel der Figuren 1 bis 4 sowie in den Figu-ren 17 bis 25 dargestellt. Die Kontaktfläche 12 ist vorzugsweise konkav und die Stirnfläche 13 konvex gewölbt. Auf diese Weise kann durch ein Verkippen zwischen Kontaktbereich 10 und Gegenkontaktelement 8 auch ein vertikaler Versatz, also ein Versatz in Steckrichtung S (vgl. Figur 1) ausgeglichen werden. Die Kontaktfläche 12 bzw. Stirnfläche 13 kann allerdings auch eben bzw. plan oder zumindest im Wesentlichen eben ausgebildet sein, wie in Figur 5 oder in den Figuren 7 bis 16 dargestellt.

Um die Kontaktierung weiter zu verbessern, kann vorgesehen sein, dass die Kontaktfläche 12 des Kontaktbereichs 10 und die Stirnfläche 13 des Gegenkontaktelements 8 eine gegenseitige Verzahnung 29 ausbilden, vorzugsweise mit Zähnen mit linearen, spitz zulaufend Zahnflanken. Die Verzahnung 29 ist auf der Kontaktfläche 12 bzw. auf der Stirnfläche 13 angeordnet bzw. bildet die Kontaktfläche 12 bzw. Stirnfläche 13 aus. Eine Verzahnung 29 ist beispielhaft in Figur 5 angedeutet und insbesondere in den Ausführungsbeispielen der Figuren 7 bis 25 im Detail dargestellt.

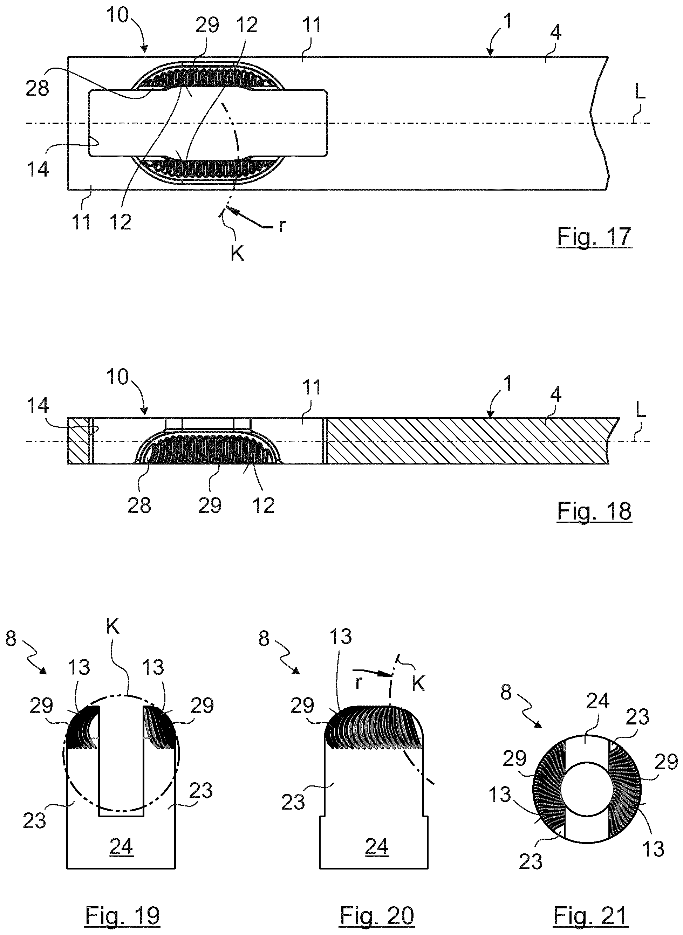

Insbesondere kann vorgesehen sein, dass die einzelnen Zähne auf der Kontaktfläche 12 und auf der Stirnfläche 13 jeweilige Erhebungen ausbilden. Die Kontaktfläche 12 und/oder Stirnfläche 13 mit der jeweiligen Verzahnung kann hierzu beispielsweise auf der Oberfläche des Kontaktbereichs 10 bzw. des Gegenkontaktelements 8 aufgesetzt sein, wie in Figur 8 dargestellt. Alternativ kann auch eine spanende Bearbeitung zur Herausarbeitung der einzelnen Zähne vorgesehen sein, wie in Figur 10 gezeigt. Auch Verzahnungen 29 innerhalb der Rücksprünge 28 können vorgesehen sein, wie beispielsweise gut in Figur 18 erkennbar.

Der Kontaktbereich 10 kann optional eine Beschichtung 30 aufweisen, insbesondere eine korrosionsbeständige Beschichtung 30, beispielsweise eine Kupferbeschichtung oder eine Silberbeschichtung. Eine Beschichtung 30 in der Art eines auf den Kontaktbereich 10 aufgebrachten Plättchens ist beispielhaft in Figur 8 dargestellt. Die Beschichtung 30 kann gegebenenfalls gleichzeitig auch die Verzahnung 29 ausbilden, wie dargestellt.

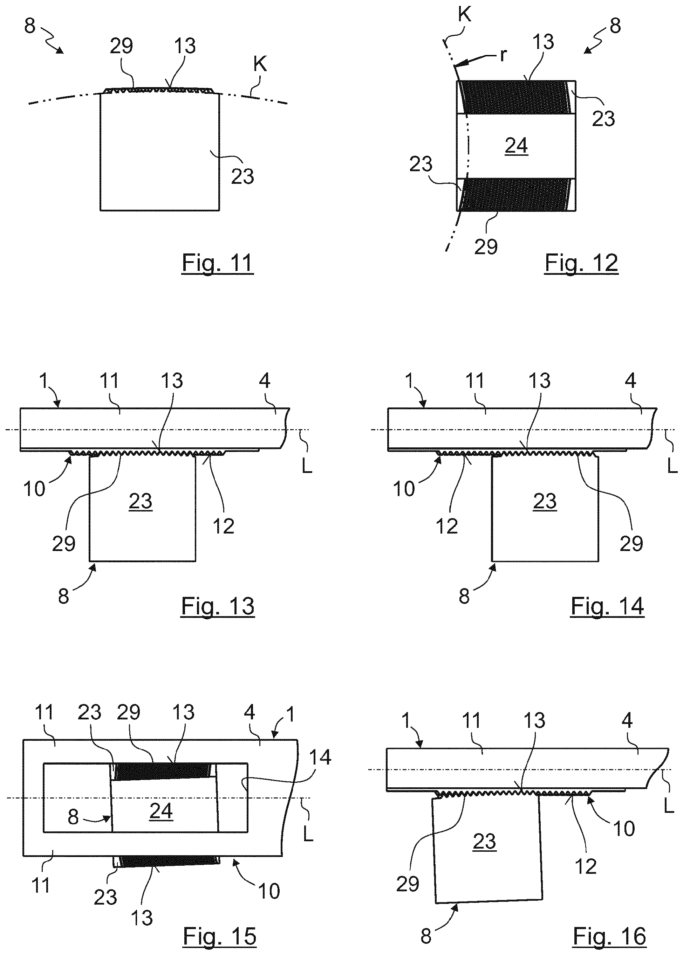

Um einen Versatz zwischen dem Kontaktbereich 10 und dem Gegenkontaktelement 8 in möglichst vielen Freiheitsgraden auszugleichen, kann vorgesehen sein, dass die Zähne auf der Kontaktfläche 12 und auf der Stirnfläche 13 jeweils dem Verlauf eines Kreisbogens K folgen, mit vorzugsweise identischen Radien r (vgl. insbesondere die Figuren 7, 9 und 12). Bereits auf diese Weise kann ein Versatzausgleich in zwei Raumrichtungen möglich sein: entlang der Längsachse L des elektrischen Leiters 4 (vgl. Figuren 13 und 14 in Zusammenschau) und orthogonal hierzu, also in Querrichtung Q (vgl. Figur 1) des elektrischen Leiters 4. Der Versatz in Querrichtung Q kann durch ein entsprechendes Verdrehen zwischen Kontaktbereich 10 und Gegenkontaktelement 8 entlang des Kreisbogens K ermöglicht werden (vgl. hierzu Figur 15).

Um ergänzend auch noch einen Ausgleich in Steckrichtung S durch ein Verkippen zwischen Kontaktbereich 10 und Gegenkontaktelement 8 zu ermöglichen, kann vorgesehen sein, dass die Zähne des Gegenkontaktelements 8 auf einer elliptisch gewölbten Oberfläche des Gegenkontaktelements 8 entlang eines weiteren Kreisbogens K verlaufend angeordnet sind (vgl. Figur 11). Auf diese Weise kann ein Verkippen ermöglicht werden, wie beispielsweise in Figur 16 dargestellt.

Ein besonders vorteilhafter Versatzausgleich kann sich bei einer Ausgestaltung des Kontaktbereichs 10 und des Gegenkontaktelements 8 gemäß den Darstellungen der Figuren 17 bis 25 ergeben. Die Verzahnung 29 ist seitlich des Kontaktbereichs 10 innerhalb des Rücksprungs 28 vorgesehen und folgt dabei einem in Figur 17 dargestellten Kreisbogen K, wobei die Kontaktfläche 12 zudem einen gewölbten Verlauf aufweist. Das Gegenkontaktelement 8 ist entsprechend komplementär ausgebildet, was sich gut aus den Figuren 19 bis 21 erkennen lässt.

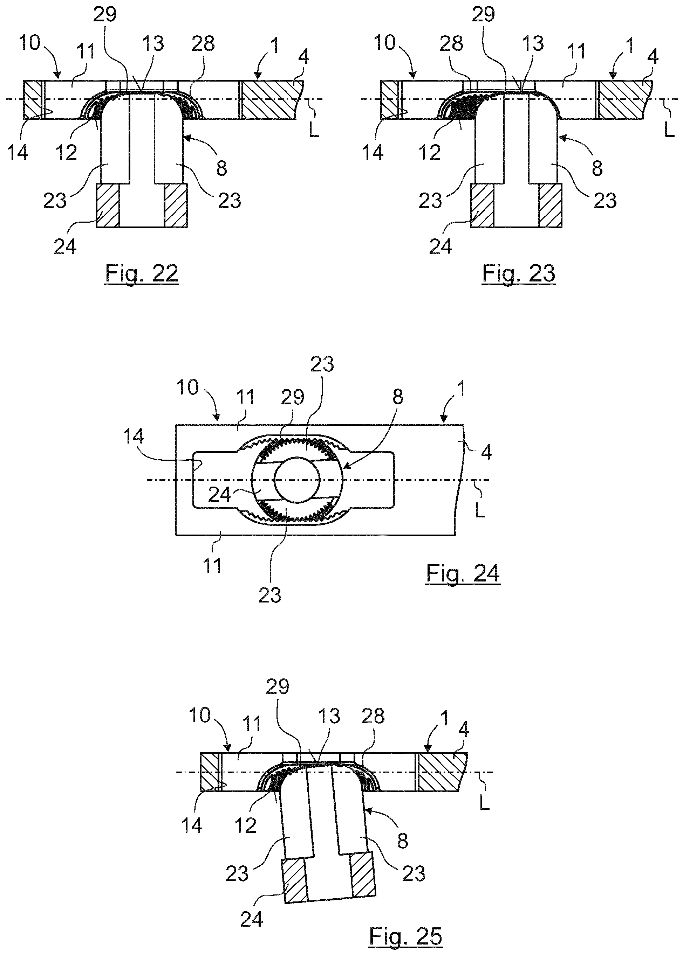

Sich hieraus ergebende Möglichkeiten zum Versatzausgleich sind beispielhaft in den Figuren 22 bis 25 dargestellt. Figur 22 zeigt eine Idealposition zwischen Kontaktbereich 10 und Gegenkontaktelement 8 ohne Versatz. In Figur 23 ist ein Versatz entlang der Längsachse L des elektrischen Leiters 4 dargestellt. Figur 24 zeigt eine Verdrehung zwischen Kontaktbereich 10 und Gegenkontaktelement 8 entlang einer der Steckrichtung S folgenden Drehachse. Ein Verkippen zwischen Kontaktbereich 10 und Gegenkontaktelement 8 bezogen auf die Steckrichtung S ist schließlich in Figur 25 dargestellt. Aufgrund der gegenseitigen Verzahnung 29 kann außerdem auch ein translatorischer Versatz in Querrichtung Q und Steckrichtung S möglich sein.

## Patentansprüche

1. Elektrischer Steckverbinder (3) zur elektrischen Verbindung eines in den Steckverbinder (3) mündenden elektrischen Leiters (4) mit einem korrespondierenden elektrischen Gegensteckverbinder (6), wobei der elektrische Steckverbinder (3) einen Kontaktbereich (10) mit einer Kontaktfläche (12) aufweist, der an dem elektrischen Leiter (4) ausgebildet ist, um mit seiner Kontaktfläche (12) eine Stirnfläche (13) eines Gegenkontaktelements (8) des Gegensteckverbinders (6) zu kontaktieren,
**gekennzeichnet durch**
wenigstens ein Federelement (25) das ausgebildet ist, um den elektrischen Leiter (4) mit einer in Richtung auf den Gegensteckverbinder (6) weisende Federkraft zu beaufschlagen.

2. Elektrischer Steckverbinder (3) nach Anspruch 1,
**dadurch gekennzeichnet , dass**
der Kontaktbereich (10) aus wenigstens einem plattenförmigen Endabschnitt des elektrischen Leiters (4) ausgeformt ist.

3. Elektrischer Steckverbinder (3) nach Anspruch 1 oder 2,
**dadurch gekennzeichnet , dass**
der Kontaktbereich (10) einen Rücksprung (28) ausbildet, um das Gegenkontaktelement (8) innerhalb des Rücksprungs (28) zu kontaktieren.

4. Elektrischer Steckverbinder (3) nach einem der Ansprüche 1 bis 3,
**dadurch gekennzeichnet , dass**
der Kontaktbereich (10) eine Beschichtung (30) aufweist, vorzugsweise eine korrosionsbeständige Beschichtung (30), beispielsweise eine Kupferbeschichtung oder eine Silberbeschichtung.

5. Elektrischer Steckverbinder (3) nach einem der Ansprüche 1 bis 4,
**dadurch gekennzeichnet , dass**
das wenigstens eine Federelement (25) zwischen einem Steckverbindergehäuse (15), vorzugsweise einer Oberschale (16) eines mehrteiligen Steckverbindergehäuses (15), und dem Kontaktbereich (10) angeordnet ist.

6. Elektrisches Verbindungselement (1), aufweisend wenigstens zwei elektrische Steckverbinder (3) gemäß einem der Ansprüche 1 bis 5 und den elektrischen Leiter (4), wobei an zumindest zwei Enden des elektrischen Leiters (4) ein jeweiliger Steckverbinder (3) angeordnet ist.

7. Elektrisches Verbindungselement (1) nach Anspruch 6,
**dadurch gekennzeichnet , dass**
der elektrische Leiter (4) als Kabel mit im Bereich der Enden kompaktierten Einzeldrähten oder als Stromschiene ausgebildet ist.

8. Elektrische Steckverbindung (7), aufweisend einen elektrischen Steckverbinder (3) und einen korrespondierenden elektrischen Gegensteckverbinder (6), wobei der Steckverbinder (3) eingerichtet ist, einen in den Steckverbinder (3) mündenden elektrischen Leiters (4) mit dem Gegensteckverbinder (6) elektrische zu verbinden, und wobei der elektrische Steckverbinder (3) einen Kontaktbereich (10) mit einer Kontaktfläche (12) aufweist, der an dem elektrischen Leiter (4) ausgebildet ist, um mit seiner Kontaktfläche (12) eine Stirnfläche (13) eines Gegenkontaktelements (8) des Gegensteckverbinders (6) zu kontaktieren, wobei der Gegensteckverbinder (6) mit einer elektrischen Einrichtung (2) verbunden ist, um im verbundenen Zustand der Steckverbindung (7) eine elektrische Verbindung zwischen dem elektrischen Leiter (4) und der elektrischen Einrichtung (2) herzustellen,
**dadurch gekennzeichnet , dass**
der Steckverbinder (3) wenigstens ein Federelement (25) aufweist das ausgebildet ist, um den elektrischen Leiter (4) mit einer in Richtung auf den Gegensteckverbinder (6) weisende Federkraft zu beaufschlagen und/oder dass der Gegensteckverbinder (6) wenigstens ein Federelement (25) aufweist, um das Gegenkontaktelement (8) mit einer in Richtung auf den Steckverbinder (3) weisenden Federkraft zu beaufschlagen.

9. Elektrische Steckverbindung (7) nach Anspruch 8,
**dadurch gekennzeichnet , dass**
das Gegenkontaktelement (8) wenigstens eine Metallplatte (23) aufweist, vorzugsweise wenigstens zwei von einer gemeinsamen Basis (24) ausgehende Metallplatten (23), wobei die wenigstens eine Metallplatte (23) an einer dem Kontaktbereich (10) zugewandten Seite zumindest einen Teil der Stirnfläche (13) ausbildet, um den Kontaktbereich (10) zu kontaktieren.

10. Elektrische Steckverbindung (7) nach Anspruch 8 oder 9,
**dadurch gekennzeichnet , dass**
die Kontaktfläche (12) des Kontaktbereichs (10) gewölbt und die Stirnfläche (13) des Gegenkontaktelements (8) zu der Wölbung der Kontaktfläche (12) komplementär ausgebildet ist, wobei die Kontaktfläche (12) vorzugsweise konkav und die Stirnfläche (13) des Gegenkontaktelements (8) vorzugsweise konvex gewölbt ist.

11. Elektrische Steckverbindung (7) nach einem der Ansprüche 8 bis 10,
**dadurch gekennzeichnet , dass**
die Kontaktfläche (12) des Kontaktbereichs (10) und die Stirnfläche (13) des Gegenkontaktelements (8) eine gegenseitige Verzahnung (29) ausbilden, vorzugsweise mit Zähnen mit linearen, spitz zulaufenden Zahnflanken.

12. Elektrische Steckverbindung (7) nach Anspruch 11,
**dadurch gekennzeichnet , dass**
die Zähne auf der Kontaktfläche (12) und auf der Stirnfläche (13) des Gegenkontaktelements (8) jeweilige Erhebungen ausbilden.

13. Elektrische Steckverbindung (7) nach Anspruch 11 oder 12,
**dadurch gekennzeichnet , dass**
die Zähne auf der Kontaktfläche (12) und auf der Stirnfläche (13) des Gegenkontaktelements (8) jeweils dem Verlauf eines Kreisbogens (K) folgen, mit vorzugsweise identischen Radien (r) der jeweiligen Kreisbögen (K).

14. Elektrische Steckverbindung (7) nach einem der Ansprüche 8 bis 13,
**dadurch gekennzeichnet , dass**
das Gegenkontaktelement (8) Vorsprünge und/oder Aussparungen (26) aufweist, die ausgebildet sind, um von dem wenigstens ein Federelement (25) des Steckverbinders (3) hintergriffen zu werden, um den elektrischen Leiter (4) und das Gegenkontaktelement (8) gegenseitig zu verspannen.

15. Elektrische Steckverbindung (7) nach Anspruch 14,
**dadurch gekennzeichnet , dass**
das wenigstens eine Federelement (25) zwei Schenkel (27) aufweist, mit deren Enden es in zwei als Längsnuten (26) ausgebildete Aussparungen des Gegenkontaktelements (8) einfügbar ist, um den elektrischen Leiter (4) und das Gegenkontaktelement (8) gegenseitig zu verspannen.

## Claims

1. Electrical plug connector (3) for electrically connecting an electrical conductor (4) terminating in the plug connector (3) to a corresponding electrical mating plug connector (6), wherein the electrical plug connector (3) comprises a contact region (10) having a contact surface (12), which is formed on the electrical conductor (4) in order to contact, with its contact surface (12), an end face (13) of a counter contact element (8) of the mating plug connector (6),
**characterized by**
at least one spring element (25) which is configured to apply to the electrical conductor (4) a spring force directed towards the mating plug connector (6).

2. Electrical plug connector (3) according to claim 1,
**characterized in that**
the contact region (10) is formed from at least one plate-shaped end section of the electrical conductor (4).

3. Electrical plug connector (3) according to claim 1 or 2,
**characterized in that**
the contact region (10) forms a recess (28) in order to contact the counter contact element (8) within the recess (28).

4. Electrical plug connector (3) according to one of claims 1 to 3,
**characterized in that**
the contact region (10) comprises a coating (30), preferably a corrosion-resistant coating (30), for example a copper coating or a silver coating.

5. Electrical plug connector (3) according to one of claims 1 to 4,
**characterized in that**
the at least one spring element (25) is arranged between a plug connector housing (15), preferably an upper shell (16) of a multi-part plug connector housing (15), and the contact region (10).

6. Electrical connection element (1), comprising at least two electrical plug connectors (3) according to one of claims 1 to 5 and the electrical conductor (4), wherein a respective plug connector (3) is arranged at at least two ends of the electrical conductor (4).

7. Electrical connection element (1) according to claim 6,
**characterized in that**
the electrical conductor (4) is formed as a cable with individually compacted strands in the region of the ends or as a busbar.

8. Electrical plug connection (7), comprising an electrical plug connector (3) and a corresponding electrical mating plug connector (6), wherein the plug connector (3) is configured to electrically connect an electrical conductor (4) terminating in the plug connector (3) to the mating plug connector (6), and wherein the electrical plug connector (3) comprises a contact region (10) having a contact surface (12), which is formed on the electrical conductor (4) in order to contact, with its contact surface (12), an end face (13) of a counter contact element (8) of the mating plug connector (6), wherein the mating plug connector (6) is connected to an electrical device (2) in order to establish, in a connected state of the plug connection (7), an electrical connection between the electrical conductor (4) and the electrical device (2),
**characterized in that**
the plug connector (3) comprises at least one spring element (25) which is configured to apply to the electrical conductor (4) a spring force directed towards the mating plug connector (6) and/or that the mating plug connector (6) comprises at least one spring element (25) in order to apply to the counter contact element (8) a spring force directed towards the plug connector (3).

9. Electrical plug connection (7) according to claim 8,
**characterized in that**
the counter contact element (8) comprises at least one metal plate (23), preferably at least two metal plates (23) extending from a common base (24), wherein the at least one metal plate (23) forms, on a side facing the contact region (10), at least a portion of the end face (13) in order to contact the contact region (10).

10. Electrical plug connection (7) according to claim 8 or 9,
**characterized** i**n that**
the contact surface (12) of the contact region (10) is curved and the end face (13) of the counter contact element (8) is formed complementary to the curvature of the contact surface (12), wherein the contact surface (12) is preferably concave and the end face (13) of the counter contact element (8) is preferably convexly curved.

11. Electrical plug connection (7) according to one of claims 8 to 10,
**characterized in that**
the contact surface (12) of the contact region (10) and the end face (13) of the counter contact element (8) form a mutual toothing (29), preferably with teeth having linear, tapering tooth flanks.

12. Electrical plug connection (7) according to claim 11,
**characterized in that**
the teeth on the contact surface (12) and on the end face (13) of the counter contact element (8) each form elevations.

13. Electrical plug connection (7) Accor ding to claim 11 or 12,
**characterized in that**
the teeth on the contact surface (12) and on the end face (13) of the counter contact element (8) each follow the course of a circular arc (K), with preferably identical radii (r) of the respective circular arcs (K).

14. Electrical plug connection (7) according to one of claims 8 to 13,
**characterized in that**
the counter contact element (8) comprises projections and/or recesses (26), which are configured to be engaged behind by the at least one spring element (25) of the plug connector (3) in order to clamp the electrical conductor (4) and the counter contact element (8) against each other.

15. Electrical plug connection (7) according to claim 14,
**characterized in that**
the at least one spring element (25) comprises two legs (27), with the ends of which it is insertable into two recesses of the counter contact element (8) formed as longitudinal grooves (26), in order to clamp the electrical conductor (4) and the counter contact element (8) against each other.

## Revendications

1. Connecteur électrique (3) pour la connexion électrique d'un conducteur électrique (4) débouchant dans le connecteur électrique (3) avec un contre-connecteur électrique (6) correspondant, le connecteur électrique (3) comportant une zone de contact (10) avec une surface de contact (12), qui est formée sur le conducteur électrique (4) afin de mettre en contact, avec sa surface de contact (12), une face d'extrémité (13) d'un élément de contre-contact (8) du contre-connecteur électrique (6), **caractérisé par** 10 au moins un élément élastique (25) qui est formé pour appliquer au conducteur électrique (4) une force de ressort orientée vers le contre-connecteur électrique (6).

2. Connecteur électrique (3) selon la revendication 1, **caractérisé en ce que** la zone de contact (10) est formée à partir d'au moins une section d'extrémité en forme de plaque du conducteur électrique (4).

3. Connecteur électrique (3) selon la revendication 1 ou 2, **caractérisé en ce que** la zone de contact (10) forme un renfoncement (28) afin de mettre en contact l'élément de contre-contact (8) à l'intérieur du renfoncement (28).

4. Connecteur électrique (3) selon l'une des revendications 1 à 3, **caractérisé en ce que** la zone de contact (10) comporte un revêtement (30), de préférence un revêtement résistant à la corrosion (30), par exemple un revêtement en cuivre ou un revêtement en argent.

5. Connecteur électrique (3) selon l'une des revendications 1 à 4, **caractérisé en ce que** le au moins un élément élastique (25) est disposé entre un boîtier de connecteur (15), de préférence une coque supérieure (16) d'un boîtier de connecteur en plusieurs parties (15), et la zone de contact (10).

6. Élément de connexion électrique (1), comportant au moins deux connecteurs électriques (3) selon l'une des revendications 1 à 5 et le conducteur électrique (4), un connecteur (3) respectif étant disposé à au moins deux extrémités du conducteur électrique (4).

7. Élément de connexion électrique (1) selon la revendication 6, **caractérisé en ce que** le conducteur électrique (4) est formé comme un câble avec des fils individuels compactés dans la zone des extrémités ou comme une barre conductrice.

8. Connexion enfichable électrique (7), comportant un connecteur électrique (3) et un contre-connecteur électrique (6) correspondant, le connecteur (3) étant conçu pour connecter électriquement un conducteur électrique (4) débouchant dans le connecteur électrique (3) avec le contre-connecteur électrique (6), et le connecteur électrique (3) comportant une zone de contact (10) avec une surface de contact (12), qui est formée sur le conducteur électrique (4) afin de mettre en contact, avec sa surface de contact (12), une face d'extrémité (13) d'un élément de contre-contact (8) du contre-connecteur électrique (6), le contre-connecteur électrique (6) étant connecté à un dispositif électrique (2) afin d'établir, à l'état connecté de la connexion enfichable électrique (7), une connexion électrique entre le conducteur électrique (4) et le dispositif électrique (2), **caractérisée en ce que** le connecteur (3) comporte au moins un élément élastique (25) qui est formé pour appliquer au conducteur électrique (4) une force de ressort orientée vers le contre-connecteur électrique (6) et/ou **en ce que** le contre-connecteur électrique (6) comporte au moins un élément élastique (25) pour appliquer à l'élément de contre-contact (8) une force de ressort orientée vers le connecteur électrique (3).

9. Connexion enfichable électrique (7) selon la revendication 8, **caractérisée en ce que** l'élément de contre-contact (8) comporte au moins une plaque métallique (23), de préférence au moins deux plaques métalliques (23) partant d'une base (24) commune, la au moins une plaque métallique (23) formant, sur un côté tourné vers la zone de contact (10), au moins une partie de la face d'extrémité (13) afin de mettre en contact la zone de contact (10).

10. Connexion enfichable électrique (7) selon la revendication 8 ou 9, **caractérisée en ce que** la surface de contact (12) de la zone de contact (10) est courbée et la face d'extrémité (13) de l'élément de contre-contact (8) est formée de manière complémentaire à la courbure de la surface de contact (12), la surface de contact (12) étant de préférence concave et la face d'extrémité (13) de l'élément de contre-contact (8) étant de préférence convexe et courbée.

11. Connexion enfichable électrique (7) selon l'une des revendications 8 à 10, **caractérisée en ce que** la surface de contact (12) de la zone de contact (10) et la face d'extrémité (13) de l'élément de contre-contact (8) forment une denture (29) mutuelle, de préférence avec des dents ayant des flancs de dent linéaires et effilés.

12. Connexion enfichable électrique (7) selon la revendication 11, **caractérisée en ce que** les dents sur la surface de contact (12) et sur la face d'extrémité (13) de l'élément de contre-contact (8) forment respectivement des reliefs.

13. Connexion enfichable électrique (7) selon la revendication 11 ou 12, **caractérisée en ce que** les dents sur la surface de contact (12) et sur la face d'extrémité (13) de l'élément de contre-contact (8) suivent respectivement le tracé d'un arc de cercle (K), avec de préférence des rayons (r) identiques des arcs de cercle (K) respectifs.

14. Connexion enfichable électrique (7) selon l'une des revendications 8 à 13, **caractérisée en ce que** l'élément de contre-contact (8) comporte des saillies et/ou des évidements (26), qui sont formés pour être engagés par l'arrière par le au moins un élément élastique (25) du connecteur électrique (3), afin de mettre en tension mutuellement le conducteur électrique (4) et l'élément de contre-contact (8).

15. Connexion enfichable électrique (7) selon la revendication 14, **caractérisée en ce que** le au moins un élément élastique (25) comporte deux branches (27), dont les extrémités sont insérables dans deux évidements formés comme rainures longitudinales (26) de l'élément de contre-contact (8), afin de mettre en tension mutuellement le conducteur électrique (4) et l'élément de contre-contact (8).
